# EUROPÄISCHE PATENTANMELDUNG

(11) **EP 3 276 799 A1**
(43) Veröffentlichungstag der Anmeldung: **31.01.2018**
(21) Anmeldenummer: 16181932.1
(22) Anmeldetag: 29.07.2016
(51) Int. Cl.: H02K 7/04, H02K 15/16, H02K 11/20

(54) **VERFAHREN ZUM BETRIEB EINES ROTORS**

(71) Anmelder: Siemens Aktiengesellschaft, 80333 München (DE)
(72) Erfinder: Sewiolo, Benjamin, 90587 Obermichelbach (DE)

(57) **Zusammenfassung**

Die Erfindung betrifft ein Verfahren zum Betrieb eines Rotors (3) in einer elektrischen rotierenden Maschine (1). Um, im Vergleich zum Stand der Technik, durch kürzere Inbetriebnahme und Wartungszeiten eine höhere Verfügbarkeit zu erreichen, wird vorgeschlagen, dass während des Betriebes der elektrischen rotierenden Maschine (1) der Rotor (3) automatisiert gewuchtet wird, wobei auf dem mindestens einen Wuchtgewicht (10) eine Markierung (14) angeordnet wird, wobei mindestens eine Erfassungseinrichtung (15) auf eine Oberfläche (13) des Rotors (3) gerichtet wird, wobei von der Erfassungseinrichtung (15) eine Position der Markierung (14) erfasst wird, wobei in einer der Erfassungseinrichtung (15) nachgeordneten Auswerteeinrichtung (17) aus Daten zur Position der Markierung (14) und Daten zu mindestens einer vorgegebenen oder erfassten Referenzposition (32, 33, 34, 35) eine relative Position des mindestens einen Wuchtgewichts (10) im Verhältnis zur mindestens einen Referenzposition (32, 33, 34, 35) ermittelt wird.

## Beschreibung

Die Erfindung betrifft ein Verfahren zum Betrieb eines Rotors in einer elektrischen rotierenden Maschine.

Darüber hinaus betrifft die Erfindung eine Vorrichtung zur Durchführung eines derartigen Verfahrens.

Ferner betrifft die Erfindung eine elektrische rotierende Maschine, welche mindestens eine derartige Vorrichtung aufweist.

Elektrische rotierende Maschinen, insbesondere Motoren und Generatoren, weisen einen sich im Betrieb drehenden Rotor auf. Bei dem sich drehenden Rotor, der beispielsweise für Maschinen mit einer Leistung von mindestens einem Megawatt geeignet ist, treten signifikante Unwuchten auf, die störende Schwingungen verursachen. Daher wird ein Massenausgleich, der insbesondere durch Auswuchten erzielt wird, durchgeführt, um die störenden Schwingungen zu vermeiden und so beispielsweise die angestrebte Lebensdauer von Lagern zu gewährleisten.

Ein Rotor wird in der Regel ausgewuchtet, indem während einer Rotation eine Unwucht, beispielsweise mit Hilfe einer Schwingungsmessung, gemessen wird. Daraufhin werden bei einem Stillstand des Rotors Wuchtgewichte, beispielsweise an einer tangentialen Position, fest eingebaut. Nach dem Einbau der Wuchtgewichte lässt sich eine möglicherweise verbleibende Unwucht genauer messen und die Positionen der Wuchtgewichte werden optimiert. Durch einen derartigen iterativen Wuchtprozess müssen die fest eingebauten Wuchtgewichte versetzt werden. Das Ausgleichen stärkerer Unwuchten ist durch die hohe Anzahl an Iterationen zeitaufwendig und daher kostenaufwendig. Während des Betriebes der elektrischen rotierenden Maschine, insbesondere durch Temperaturschwankungen, kann sich der Wuchtzustand des Motors ändern und der Rotor muss erneut gewuchtet werden. In dieser Zeit kann die elektrische rotierende Maschine nicht betrieben werden.

Die Offenlegungsschrift EP 2 924 853 A1 offenbart einen Rotor einer rotatorischen dynamoelektrischen Maschine, der zumindest an einer Stirnseite zumindest eine umlaufende und sich in ihrem Querschnitt nach außen verjüngende Nut aufweist. In die Nut werden ein oder mehrere Nuteinsätze fest eingesetzt, um eine Wuchtung des Rotors zu ermöglichen.

Der Erfindung liegt die Aufgabe zugrunde, einen Rotor der eingangs genannten Art anzugeben, der, im Vergleich zum Stand der Technik, durch kürzere Inbetriebnahme und Wartungszeiten, mit einer höheren Verfügbarkeit betrieben werden kann.

Diese Aufgabe wird erfindungsgemäß durch ein Verfahren zum Betrieb eines Rotors in einer elektrischen rotierenden Maschine gelöst, wobei während des Betriebes der elektrischen rotierenden Maschine der Rotor automatisiert gewuchtet wird, wobei auf dem mindestens einen Wuchtgewicht eine Markierung angeordnet wird, wobei mindestens eine Erfassungseinrichtung auf eine Oberfläche des Rotors gerichtet wird, wobei von der Erfassungseinrichtung eine Position der Markierung erfasst wird, wobei in einer der Erfassungseinrichtung nachgeordneten Auswerteeinrichtung aus Daten zur Position der Markierung und Daten zu mindestens einer vorgegebenen oder erfassten Referenzposition eine relative Position des mindestens einen Wuchtgewichts im Verhältnis zur mindestens einen Referenzposition ermittelt wird.

Ferner wird die Aufgabe erfindungsgemäß durch eine Vorrichtung zur Durchführung eines derartigen Verfahrens gelöst.

Darüber hinaus wird die Aufgabe erfindungsgemäß durch eine elektrische rotierende Maschine, welche mindestens eine derartige Vorrichtung aufweist, gelöst.

Die in Bezug auf das Verfahren nachstehend angeführten Vorteile und bevorzugten Ausgestaltungen lassen sich sinngemäß auf die Vorrichtung und die elektrische rotierende Maschine übertragen.

Die Erfindung basiert auf der Idee, die Zeiten, in denen eine elektrische rotierende Maschine aufgrund einer Wartung, die aufgrund eines unzulässigen Schwingungsverhaltens des Rotors erforderlich ist, stillsteht, gering zu halten. Dies kann dadurch erreicht werden, dass während des Betriebes der elektrischen rotierenden Maschine der Rotor automatisiert gewuchtet wird. Während des automatisierten Wuchtvorgangs ist es erforderlich, zumindest eine relative Position des für das Wuchten des Rotors verwendeten mindestens einen Wuchtgewichts zu kennen. Die relative Position bezieht sich auf eine Referenzposition. Die Referenzposition kann, insbesondere von einem digitalen Simulationsmodell des Rotors, vorgegeben sein. Ferner kann eine vorgegebene Referenzposition in einer vorherigen Messung ermittelt und gespeichert sein. Eine erfasste Referenzposition ist insbesondere mindestens eine Position einer Referenzmarkierung, welche sich beispielsweise auf der Oberfläche des Rotors befindet. So kann beispielsweise jeder Schwingungsmessung eine Position des Wuchtgewichts auf dem Rotor zugeordnet werden. Dadurch ist es möglich mit weniger Iterationen und damit schneller und effektiver einen optimierten Wuchtzustand zu erreichen. Ferner kann festgestellt werden, ob sich ein Wuchtgewicht von einer Sollposition verschoben oder sogar vom Rotor gelöst hat.

Bei einer bevorzugten Ausführungsform ist auf der Oberfläche des Rotors mindestens eine Referenzmarkierung an mindestens einer Referenzposition angebracht, wobei von der mindestens einen Erfassungseinrichtung die Position der mindestens einen Referenzmarkierung erfasst wird. Durch eine derartige Referenzmarkierung wird die Position des Wuchtgewichts gleichzeitig mit der Referenzposition erfasst. Eine gleichzeitige Erfassung der Positionen führt schneller zu einem Ergebnis, da nur eine Messung erforderlich ist und die Auswertung der relativen Position des Wuchtgewichts im Bezug auf die Referenzposition unmittelbar erfolgt. Darüber hinaus ist eine gleichzeitige Positionserfassung genauer, weil die Bedingungen bei der Erfassung beider Positionen identisch sind.

In einer weiteren vorteilhaften Ausgestaltung wird zumindest die Position der Markierung von der Erfassungseinrichtung kontinuierlich während einer Drehung des Rotors erfasst. Insbesondere werden die Positionen der Markierung des mindestens einen Wuchtgewichts sowie die Position der mindestens einen Referenzmarkierung kontinuierlich während der Drehung des Rotors erfasst. Eine kontinuierliche Erfassung ermöglicht es auf Änderungen schnell zu reagieren. Insbesondere kann durch eine kontinuierliche Erfassung beispielsweise die gesamte kreisringförmige Oberfläche des Rotors an der Stirnseite durch Zusammenfügen von Einzelbildern einer einzigen Erfassungseinrichtung abgedeckt werden, was zu einer Senkung der Kosten führt.

Auf vorteilhafte Weise wird mindestens eine Bestrahlungseinrichtung auf die Oberfläche des Rotors gerichtet, wobei von der Erfassungseinrichtung eine von der Bestrahlungseinrichtung erzeugte und zumindest von der Markierung reflektierte Strahlung erfasst wird. Insbesondere werden die Markierungen von einer Lichtquelle, welche beispielsweise ein Licht im Infrarotbereich bei einer Wellenlänge von 780 nm bis 1 mm abstrahlt, beleuchtet. Die Wellenlänge des abgestrahlten Lichts kann auch im sichtbaren Bereich aber auch im UV-Bereich liegen. Durch die Verwendung einer derartigen Lichtquelle ist die Erfassung unabhängiger von äußeren Einflüssen. Die Erfassung der Positionen erfolgt aufgrund der vorherrschenden nahezu konstanten Bedingungen sehr genau.

Bevorzugt weist zumindest die Markierung einen Flächenreflektor auf, wobei eine vom Flächenreflektor zurückgeworfene Strahlungsreflexion von der Erfassungseinrichtung erfasst wird. Ein Flächenreflektor ist insbesondere als ein Retroreflektor ausgeführt, welcher einen Lichtstrahl unabhängig vom Einstrahlwinkel zur Quelle zurückwirft. Ein Flächenreflektor ermöglicht eine genaue und gegenüber äußeren Einflüssen robuste Erfassung der Markierungsposition.

Bei einer bevorzugten Ausführungsform wird von der Auswerteeinrichtung ein Winkel zwischen der Position des Wuchtgewichts und der mindestens einen Referenzposition ermittelt. Insbesondere wenn sich das Wuchtgewicht in einer kreisförmig in Umfangsrichtung verlaufenden Nut befindet, ist der Winkel zwischen der Position des Wuchtgewichts und der mindestens einen Referenzposition für den automatisierten Wuchtvorgang völlig ausreichend und lässt sich präzise und toleranzarm ermitteln.

In einer weiteren vorteilhaften Ausgestaltung wird von der Auswerteeinrichtung ein Abstand zwischen der Position des Wuchtgewichts und der mindestens einen Referenzposition ermittelt. Insbesondere wenn sich das Wuchtgewicht in einer in eine radiale Richtung verlaufenden Nut befindet, ist der Winkel zwischen der Position des Wuchtgewichts und der mindestens einen Referenzposition für den automatisierten Wuchtvorgang völlig ausreichend. Da sich das Wuchtgewicht beim automatischen Wuchten mit einer radialen Nut nicht in Umfangsrichtung bewegt, ist der von der Erfassungseinrichtung abzudeckende Bereich klein und kann mit geringem Aufwand von insbesondere einer Erfassungseinrichtung abgedeckt werden.

Bevorzugt wird die Erfassungseinrichtung mit einer von der Drehfrequenz des Rotors abhängigen Erfassungsfrequenz betrieben. Die Erfassungseinrichtung erstellt beispielsweise mit einer bestimmten Wiederholfrequenz, der Erfassungsfrequenz, Bilder vom Rotor, mit Hilfe derer die Positionen der Markierungen bestimmt werden. Ist die Erfassungsfrequenz abhängig von der Drehfrequenz des Rotors, so werden die Positionen der Markierungen immer im selben Bereich auf dem Rotor erfasst, was die Auswertung der Daten, welche von der Erfassungseinrichtung generiert werden, erleichtert.

Bei einer vorteilhaften Ausgestaltung wird die Erfassungsfrequenz der Erfassungseinrichtung zwischen 50% und 90% der Drehfrequenz des Rotors gewählt. Bei einer derartigen Erfassungsfrequenz werden bei aufeinanderfolgenden Rotorumdrehungen von der Erfassungseinrichtung unterschiedliche Teile der Rotoroberfläche erfasst. Dadurch ist es möglich durch Zusammenfügen von Einzelbildern einer einzigen Erfassungseinrichtung die gesamte Rotoroberfläche zu erfassen.

Zweckdienlicherweise wird ein Schwingungsverhalten des Rotors im Hinblick auf eine Unwucht des Rotors ausgewertet. Erfahrungsgemäß hat sich eine derartige Auswertung als besonders vorteilhaft erwiesen.

Bevorzugt wird eine Sollposition für das mindestens eine Wuchtgewicht an eine Steuervorrichtung übermittelt. Durch die Ermittlung einer Sollposition ist es möglich mit weniger Iterationen und damit schneller und effektiver einen optimierten Wuchtzustand zu erreichen.

Auf vorteilhafte Weise wird das mindestens eine Wuchtgewicht von der Steuervorrichtung zur Sollposition gesteuert. Das Wuchtgewicht kann beispielsweise über Rollen oder Räder zu einer Sollposition gesteuert werden. Eine derartige gesteuerte Bewegung des mindestens einen Wuchtgewichts ist zuverlässig und genau.

Bei einer vorteilhaften Ausgestaltung wird während der Steuerung des mindestens einen Wuchtgewichts erneut eine Position des mindestens einen Wuchtgewichts kontinuierlich bestimmt. Bei einer kontinuierlichen Erfassung der Position des Wuchtgewichts ist eine Steuerung zu einer Sollposition schnell und präzise.

Im Folgenden wird die Erfindung anhand der in den Figuren dargestellten Ausführungsbeispiele näher beschrieben und erläutert.

Es zeigen:
- FIG 1: einen vergrößerten Längsschnitt einer elektrischen rotierenden Maschine mit einer ersten Ausführung eines Rotors,
- FIG 2: einen vergrößerten Längsschnitt einer elektrischen rotierenden Maschine mit einer zweiten Ausführung eines Rotors,
- FIG 3: eine vergrößerte dreidimensionale Schnittdarstellung einer dritten Ausführung eines Rotors für eine elektrische rotierende Maschine,
- FIG 4: einen Querschnitt einer vierten Ausführung eines Rotors,
- FIG 5: einen Querschnitt einer fünften Ausführung eines Rotors und
- FIG 6: ein Flussdiagramm eines automatisierten Wuchtvorgangs.

Gleiche Bezugszeichen haben in den verschiedenen Figuren die gleiche Bedeutung.

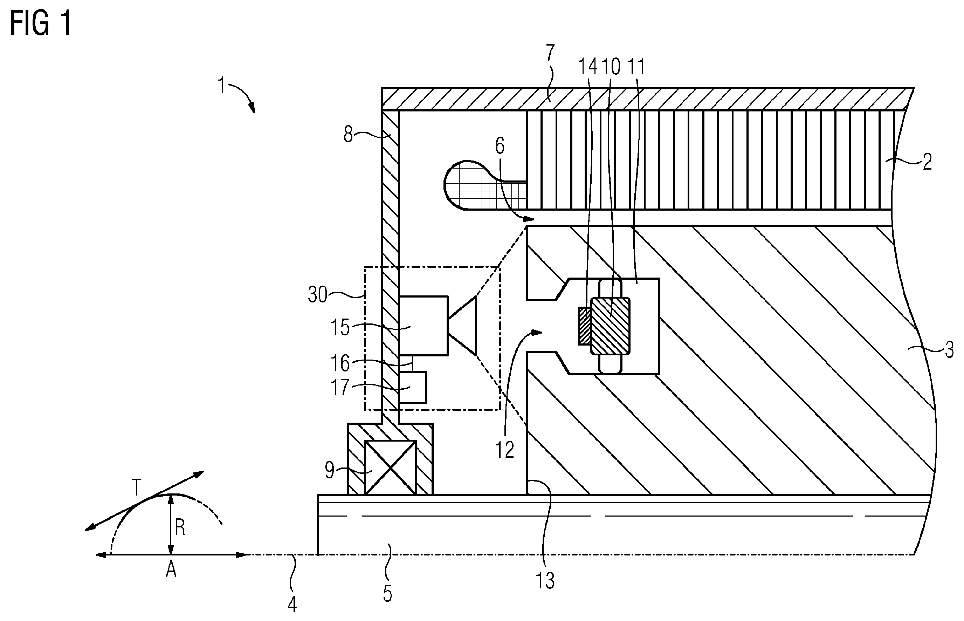

FIG 1 zeigt einen vergrößerten Längsschnitt einer elektrischen rotierenden Maschine 1 mit einer ersten Ausführung eines Rotors 3. Die elektrische rotierende Maschine 1 ist mit einer Leistung von mindestens 1 Megawatt betreibbar. Sie weist einen Stator 2 und Rotor 3 auf, wobei der Rotor 3 um eine Rotationsachse 4 rotierbar ist. Der Rotor umfasst außerdem eine Welle 5, welche vorzugsweise aus Stahl besteht. Durch die Rotationsachse 4 wird eine axiale Richtung A, eine radiale Richtung R und eine tangentiale Richtung T definiert. Der Stator 2 ist um den Rotor 3 herum angeordnet, wobei sich zwischen dem Stator 2 und dem Rotor 3 ein Fluidspalt 6 befindet. Der Fluidspalt 6 ist als Luftspalt ausgebildet, es können sich aber auch andere Fluide im Fluidspalt 6 zwischen dem Stator 2 und dem Rotor 3 befinden. Der Stator 2 ist in einem Gehäuse 7 befestigt, wobei das Gehäuse 7 ein Lagerschild 8 mit einem Lager 9 aufweist, über das die Welle 5 gelagert ist.

Der Rotor 3 weist häufig eine Unwucht auf, die durch eine unsymmetrische Massenverteilung des Rotors 3 entsteht. Durch eine derartige Unwucht treten bei dem sich drehenden Rotor 3, insbesondere bei einer Leistung von mindestens einem Megawatt, störende Schwingungen auf. Der Rotor 3 weist daher exemplarisch ein Wuchtgewicht 10 auf um eine derartige unsymmetrische Massenverteilung des Rotors 3 auszugleichen. Das Wuchtgewicht 10 befindet sich in einer insbesondere kreisförmig in Umfangsrichtung verlaufenden Nut 11, welche zumindest teilweise umlaufend ausgeführt ist und eine Öffnung 12 an einer stirnseitigen kreisringförmigen Oberfläche 13 des Rotors 3 in axialer Richtung A aufweist. Auf dem Wuchtgewicht 10 befindet sich eine Markierung 14. Eine Erfassungseinrichtung 15, welche als Kamera ausgeführt ist, ist auf die Oberfläche 13 des Rotors 3 im Bereich der Markierung 14 gerichtet, wobei von der Erfassungseinrichtung 15 zumindest eine Position der Markierung 14 erfasst wird. Die Erfassungseinrichtung 15 ist am Lagerschild 8 der elektrischen rotierenden Maschine 1 befestigt. Alternativ zur Ausführung als Kamera kann die Erfassungseinrichtung 15 als Empfänger für elektromagnetische Strahlung ausgeführt sein. Die Erfassungseinrichtung 15 kann auch als Hochfrequenzsensor oder als ein thermischer Sensor ausgeführt sein.

Von der Erfassungseinrichtung 15 werden Daten zur Position der Markierung 14 über eine Kommunikationsschnittstelle 16 an eine Auswerteeinrichtung 17 übertragen, wobei die Auswerteeinrichtung 17 aus den Daten zur Position der Markierung 14 und Daten zu mindestens einer vorgegebenen Referenzposition 32, 33, welche in FIG 1 nicht dargestellt ist, eine relative Position des Wuchtgewichts 10 im Verhältnis zur vorgegebenen mindestens einen Referenzposition 32, 33 ermittelt. Die vorgegebene mindestens eine Referenzposition 32, 33 kann eine beispielsweise mit einem digitalen Modell simulierte Position oder eine, beispielsweise vor dem Start des Wuchtvorgangs, von der Erfassungseinrichtung 15 ermittelte und in der Auswerteeinrichtung 17 gespeicherte Position des Wuchtgewichts sein.

Es können sich auch mehrere Wuchtgewichte 10 in einer Nut 11 befinden. Sollten weitere Wuchtgewichte 10 zum Einsatz kommen, so weisen diese ebenfalls eine Markierung 14 auf. Die Markierungen 14 der Wuchtgewichte 10 können gleichartig oder verschiedenartig ausgeführt sein. Durch verschiedenartig ausgeführte Markierungen 14 kann die Erfassungseinrichtung 15 die Wuchtgewichte 10 voneinander unterscheiden.

Wie die Erfassungseinrichtung 15 ist die Auswerteeinrichtung 17 am Lagerschild 8 der elektrischen rotierenden Maschine 1 befestigt. Die Anbindung der Auswerteeinrichtung 17, beispielsweise an eine Steuereinrichtung und an eine Spannungsversorgung, kann kabelgebunden oder drahtlos erfolgen.

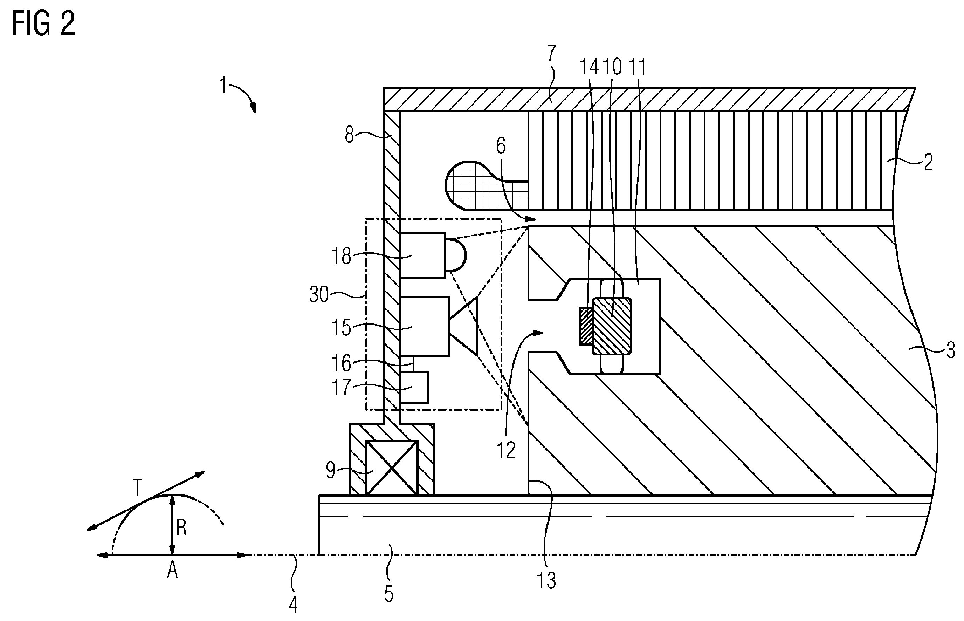

FIG 2 zeigt einen vergrößerten Längsschnitt einer elektrischen rotierenden Maschine 1 mit einer zweiten Ausführung eines Rotors 3. Eine Bestrahlungseinrichtung 18, welche am Lagerschild 8 der elektrischen rotierenden Maschine 1 befestigt ist, ist auf die Oberfläche des Rotors 3 gerichtet. Die Bestrahlungseinrichtung 18 ist bevorzugt als Beleuchtungseinrichtung, insbesondere als Infrarotlampe, ausgeführt. Analog zur Erfassungseinrichtung 15 kann die Bestrahlungseinrichtung 18 alternativ als Sendevorrichtung für, insbesondere hochfrequente, elektromagnetische Strahlung ausgeführt sein.

Das von der als Beleuchtungseinrichtung ausgeführten Bestrahlungseinrichtung 18 erzeugte Licht, welches bevorzugt im Infrarotbereich bei einer Wellenlänge von 780 nm bis 1 mm liegt, wird von der Markierung 14 reflektiert. Die Reflektierte Strahlung wird daraufhin von der Erfassungseinrichtung 15 erfasst. Die weitere Ausführung der elektrischen rotierenden Maschine 1 entspricht der Ausführung in FIG 1.

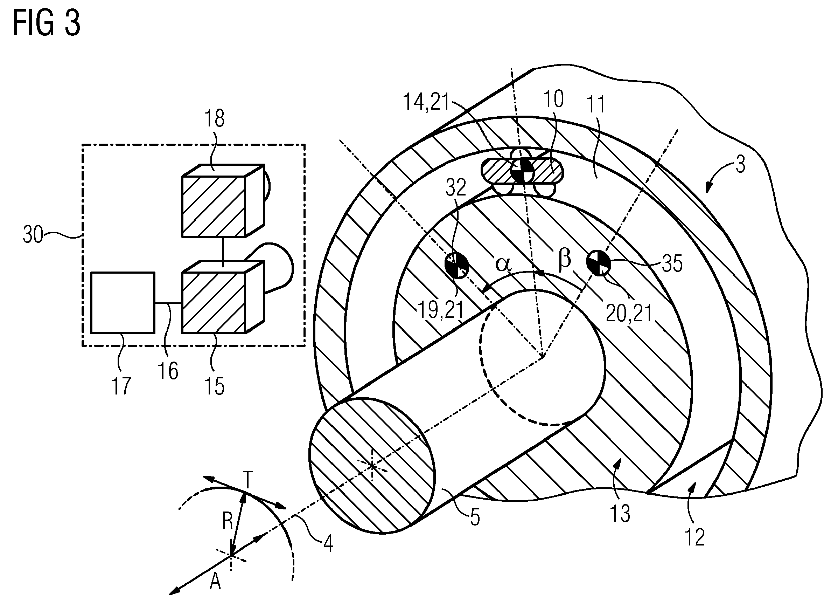

FIG 3 zeigt eine vergrößerte dreidimensionale Schnittdarstellung einer dritten Ausführung eines Rotors 3 für eine elektrische rotierende Maschine 1. Auf der Oberfläche 13 des Rotors 3 sind zwei Referenzmarkierungen 19, 20 an jeweils einer Referenzposition 32, 33 angeordnet. Von der Erfassungseinrichtung 15 wird neben der Position der Markierung 14 zusätzlich die Position der beiden Referenzmarkierungen 19, 20 erfasst. Die Auswerteeinrichtung 17 ermittelt aus der Position der Markierung 14 und der Position der ersten Referenzmarkierung 19 einen Winkel α, welcher von der Position des Wuchtgewichts 10 und einer ersten Referenzposition 32 der ersten Referenzmarkierung 19 eingeschlossen wird. Analog wird von der Auswerteeinrichtung 17 ein Winkel β ermittelt, welcher von der Position des Wuchtgewichts 10 und einer zweiten Referenzposition 33 der zweiten Referenzmarkierung 30 eingeschlossen wird.

Jede der Markierungen 14, 19, 20 weist jeweils einen Flächenreflektor 21 auf. Die von den Flächenreflektoren 21 zurückgeworfenen Strahlungsreflexionen werden von der Erfassungseinrichtung 15 erfasst. Mindestens einer der Flächenreflektoren 21 ist als Retroreflektor ausgeführt, welcher einen Lichtstrahl unabhängig vom Einstrahlwinkel zur Quelle zurückwirft. Insbesondere sind die Markierungen 14, 19, 20 kreisförmig ausgeführt, wobei die der Erfassungseinrichtung 15 zugewandte Kreisoberfläche der Markierungen 14, 19, 20 in vier gleich große Kreissegmente eingeteilt ist. Zwei schräg gegenüberliegende Quadranten sind mit einem Retroreflektor bedeckt, während die anderen dazwischen liegenden Quadranten mit einem den Lichtstrahl absorbierenden Material bedeckt sind, sodass im Wesentlichen ein Schachbrettmuster entsteht. Der Schnittpunkt der vier orthogonal angeordneten Kreissegmente befindet sich auf einem definierten Punkt des Wuchtgewichts 10. Durch derartig ausgestaltete Markierungen 14, 19, 20 lässt sich die Position des Wuchtgewichts 10 von der Erfassungseinrichtung 15 sehr exakt bestimmen.

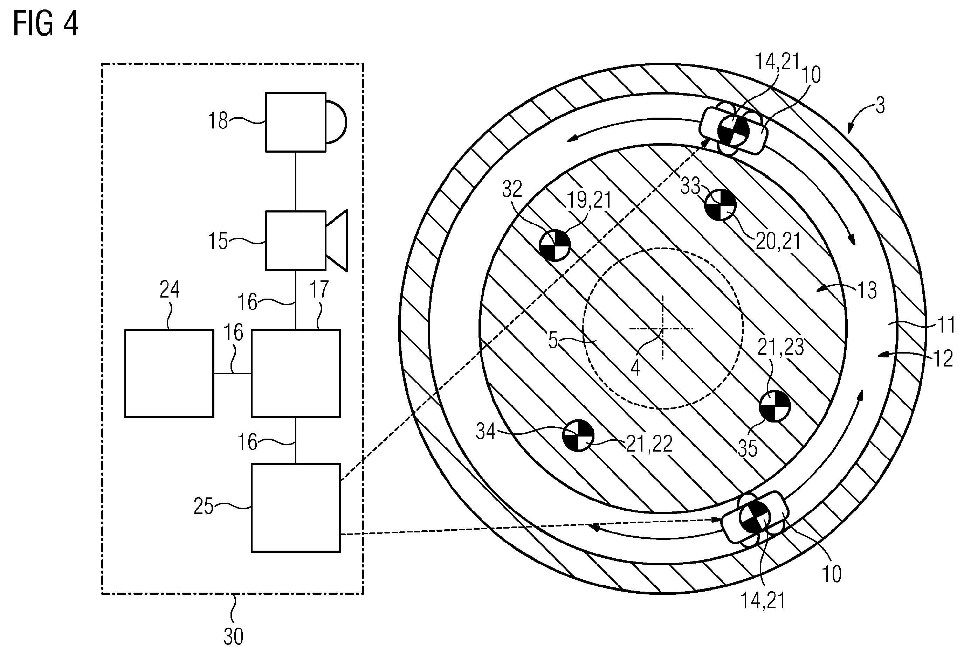

FIG 4 zeigt einen Querschnitt einer vierten Ausführung eines Rotors 3. Es sind beispielhaft zwei Wuchtgewichte 10 in einer Nut 11 angeordnet, welche mit einer als Flächenreflektor 21 ausgeführten Markierung 14 versehen sind. Darüber hinaus sind vier Referenzmarkierungen 19, 20, 22, 23 welche jeweils einen Flächenreflektor 21 aufweisen, auf jeweils einer Referenzposition 32, 33, 34, 35 in Umfangsrichtung auf der Oberfläche 13 des Rotors 3 angeordnet. Die Abstände zwischen den exemplarisch vier Referenzmarkierungen 19, 20, 22, 23 sind näherungsweise identisch.

Die Position der Markierungen 14 der Wuchtgewichte 10 und der Referenzmarkierungen 19, 20, 22, 23 wird von einer Erfassungseinrichtung 15 kontinuierlich erfasst, wobei die Auswerteeinrichtung 17 daraus die relative Position der Wuchtgewichte 10 im Verhältnis zu den bekannten Referenzpositionen 32, 33, 34, 35 ermittelt. Ein Schwingungssensor 24 erfasst das Schwingungsverhalten des Rotors 3 während des Betriebes, wobei das Schwingungsverhalten im Hinblick auf eine Unwucht des Rotors 3 von der Auswerteeinrichtung 17 ausgewertet wird. Unter Berücksichtigung der ermittelten Daten zum Schwingungsverhalten und der relativen Position der Wuchtgewichte 10 werden die Wuchtgewichte 10 von einer Steuervorrichtung 25 innerhalb der Nut 11 in Umfangsrichtung gesteuert. Sowohl die Erfassungseinrichtung 15 als auch der Schwingungssensor 24 und die Steuervorrichtung 25 sind über eine Kommunikationsschnittstelle 16 mit der Auswerteeinrichtung 17 verbunden. Die weitere Ausführung des Rotors 3 entspricht der in FIG 3.

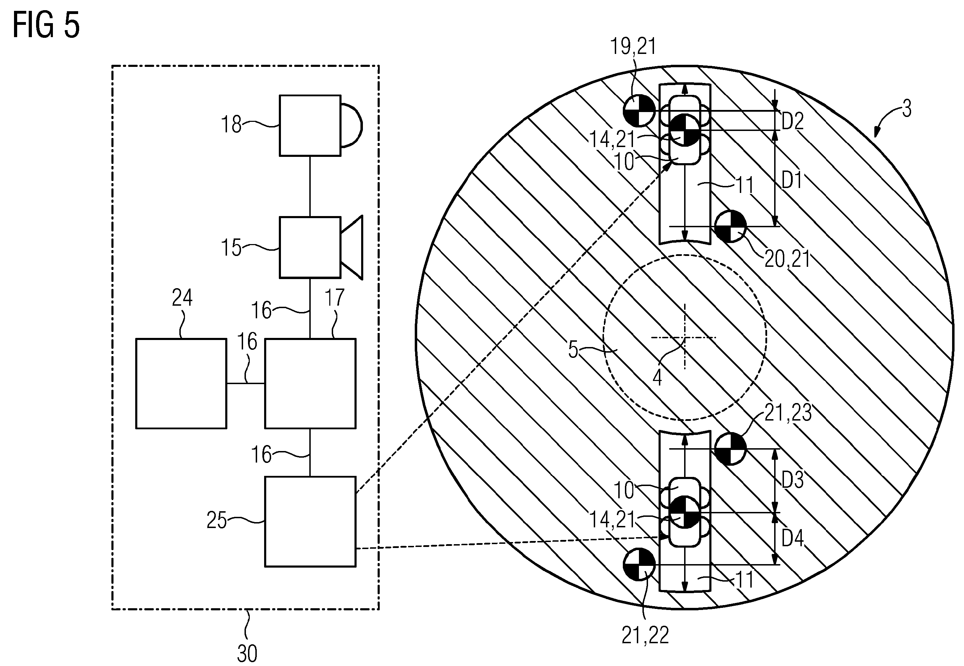

FIG 5 zeigt einen Querschnitt einer fünften Ausführung eines Rotors 3. Der Rotor weist exemplarisch zwei Nuten 11 auf, die in radiale Richtung R verlaufen. Innerhalb der Nuten 11 ist jeweils ein Wuchtgewicht 10 angeordnet, welches von einer Steuervorrichtung 25 in radiale Richtung steuerbar ist. Die Wuchtgewichte sind jeweils mit einer als Flächenreflektor 21 ausgeführten Markierung 14 versehen. Darüber sind jeder Nut 11 zwei Referenzmarkierungen 19, 20, 22, 23 zugeordnet, die jeweils einen Flächenreflektor 21 aufweisen. Die Referenzmarkierungen 19, 20, 22, 23 sind jeweils an einer Referenzposition 32, 33, 34, 35 im Bereich der in radiale Richtung R verlaufenden Nuten 11 angeordnet.

Die Position der Markierungen 14 der Wuchtgewichte 10 und der Referenzmarkierungen 19, 20, 22, 23 wird von einer Erfassungseinrichtung 15 kontinuierlich erfasst, wobei die Auswerteeinrichtung 17 daraus radiale Abstände A1, A2, A3, A4 der Wuchtgewichte 10 zu den bekannten Referenzpositionen 32, 33, 34, 35 ermittelt.

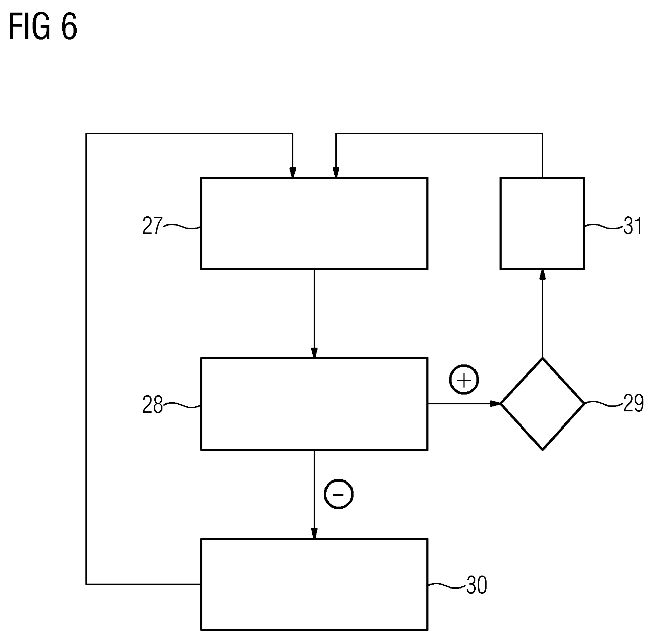

FIG 6 zeigt ein Flussdiagramm eines automatisierten Wuchtvorgangs 26. Zunächst erfolgt die Positionsbestimmung 27 der Wuchtgewichte 10. Daraufhin folgt eine Schwingungsmessung 28 im Hinblick auf eine Unwucht des Rotors 3. Liegt die Schwingungsmessung 28 des Rotors 3 in einem spezifizierten Toleranzbereich kommt es zu einer Freigabe 29 des Rotors 3 für den Betrieb in der elektrischen rotierenden Maschine 1. Liegt die Schwingungsmessung 28 außerhalb des spezifizierten Toleranzbereichs wird der automatisierte Wuchtvorgang 26 durch automatisiert gesteuertes Verschieben 30 der Wuchtgewichte 10 auf dem Rotor 3 durchgeführt. Danach erfolgt erneut eine Positionsbestimmung 27 der Wuchtgewichte 10 und eine Schwingungsmessung 28. Dieser iterative Vorgang wird solange wiederholt bis die Schwingungsmessung 28 im spezifizierten Toleranzbereich liegt und eine Freigabe 29 des Rotors 3 erfolgen kann. Nach der Freigabe 29 wird der Rotors 3 in einem Betriebsintervall 31 betrieben, wobei bevorzugt periodisch weitere Positionsbestimmungen 27 der Wuchtgewichte 10 sowie darauffolgende Schwingungsmessungen 28 erfolgen.

## Patentansprüche

1. Verfahren zum Betrieb eines Rotors (3) in einer elektrischen rotierenden Maschine (1),
wobei während des Betriebes der elektrischen rotierenden Maschine (1) der Rotor (3) automatisiert gewuchtet wird,
wobei auf dem mindestens einen Wuchtgewicht (10) eine Markierung (14) angeordnet wird,
wobei mindestens eine Erfassungseinrichtung (15) auf eine Oberfläche (13) des Rotors (3) gerichtet wird,
wobei von der Erfassungseinrichtung (15) eine Position der Markierung (14) erfasst wird,
wobei in einer der Erfassungseinrichtung (15) nachgeordneten Auswerteeinrichtung (17) aus Daten zur Position der Markierung (14) und Daten zu mindestens einer vorgegebenen oder erfassten Referenzposition (32, 33, 34, 35) eine relative Position des mindestens einen Wuchtgewichts (10) im Verhältnis zur mindestens einen Referenzposition (32, 33, 34, 35) ermittelt wird.

2. Verfahren nach Anspruch 1,
wobei auf der Oberfläche (13) des Rotors (3) mindestens eine Referenzmarkierung (19, 20, 22, 23) an mindestens einer Referenzposition (32, 33, 34, 35) angebracht ist,
wobei von der mindestens einen Erfassungseinrichtung (15) die Position der mindestens einen Referenzmarkierung (19, 20, 22, 23) erfasst wird.

3. Verfahren einem der Ansprüche 1 oder 2,
wobei zumindest die Position der Markierung (14) von der Erfassungseinrichtung (15) kontinuierlich während einer Drehung des Rotors (3) erfasst wird.

4. Verfahren nach einem der vorherigen Ansprüche,
wobei mindestens eine Bestrahlungseinrichtung (18) auf die Oberfläche des Rotors (3) gerichtet wird,
wobei von der Erfassungseinrichtung (15) eine von der Bestrahlungseinrichtung (18) erzeugte und zumindest von der Markierung (14) reflektierte Strahlung erfasst wird.

5. Verfahren nach Anspruch 4,
wobei zumindest die Markierung (14) einen Flächenreflektor (21) aufweist,
wobei eine vom Flächenreflektor (21) zurückgeworfene Strahlungsreflexion von der Erfassungseinrichtung (15) erfasst wird.

6. Verfahren nach einem der vorherigen Ansprüche,
wobei von der Auswerteeinrichtung (17) ein Winkel (α, β) zwischen der Position des mindestens einen Wuchtgewichts (10) und der mindestens einen Referenzposition (32, 33, 34, 35) ermittelt wird.

7. Verfahren nach einem der vorherigen Ansprüche,
wobei von der Auswerteeinrichtung (17) ein Abstand (D1, D2, D3, D4) zwischen der Position des mindestens einen Wuchtgewichts (10) und der mindestens einen Referenzposition (32, 33, 34, 35) ermittelt wird.

8. Verfahren nach einem der vorherigen Ansprüche,
wobei eine Erfassungsfrequenz der Erfassungseinrichtung (15) zwischen 50% und 90% einer Drehfrequenz des Rotors (3) gewählt wird.

9. Verfahren nach einem der vorherigen Ansprüche,
wobei ein Schwingungsverhalten des Rotors (3) im Hinblick auf eine Unwucht des Rotors (3) ausgewertet wird.

10. Verfahren nach einem der vorherigen Ansprüche,
wobei eine Sollposition für das mindestens eine Wuchtgewicht (10) an eine Steuervorrichtung (25) übermittelt wird.

11. Verfahren nach Anspruch 10,
wobei das mindestens eine Wuchtgewicht (10) von der Steuervorrichtung (25) zur Sollposition gesteuert wird.

12. Verfahren nach Anspruch 11,
wobei während der Steuerung des mindestens einen Wuchtgewichts (10) eine aktuelle Position des mindestens einen Wuchtgewichts (10) kontinuierlich bestimmt wird.

13. Vorrichtung (30) zur Durchführung eines Verfahrens nach einem der Ansprüche 1 bis 12.

14. Elektrische rotierende Maschine (1), welche mindestens eine Vorrichtung (30) nach Anspruch 13 aufweist.
